(19) **Europäisches Patentamt**
**European Patent Office**
**Office européen des brevets**

(11) **EP 0 738 741 B1**

(12) **EUROPÄISCHE PATENTSCHRIFT**

(45) Veröffentlichungstag und Bekanntmachung des Hinweises auf die Patenterteilung:
**18.06.2003 Patentblatt 2003/25**

(51) Int Cl.⁷: **C08G 59/42**, C08G 59/14

(21) Anmeldenummer: **96103831.2**

(22) Anmeldetag: **12.03.1996**

(54) **Epoxy(meth)acrylate, ein Verfahren zu ihrer Herstellung und ihre Verwendung**

Epoxy(meth)acrylates, a process for their preparation and their use

Epoxy(méth)acrylates, un procédé pour leur préparation et leur utilisation

(84) Benannte Vertragsstaaten:
**BE DE ES FR GB IT NL SE**

(30) Priorität: **24.03.1995 DE 19510766**

(43) Veröffentlichungstag der Anmeldung:
**23.10.1996 Patentblatt 1996/43**

(73) Patentinhaber: **BAYER AG**
**51368 Leverkusen (DE)**

(72) Erfinder:
• **Meixner, Jürgen, Dr.**
 **47083 Krefeld (DE)**
• **Fischer, Wolfgang, Dr.**
 **40668 Meerbusch (DE)**

(56) Entgegenhaltungen:
**DE-A- 2 547 103 US-A- 4 187 257**
**US-A- 4 357 456**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Epoxy(meth)acrylaten, die Verwendung der so hergestellten Epoxy(meth)acrylate als radikalisch aushärtbare Bindemittel zur Herstellung von Überzugsmitteln, Spachtel- und Dichtmassen bzw. zur Herstellung von Formkörpern.

Der Begriff "Epoxy(meth)acrylate" steht stellvertretend für Acrylat- oder Methacrylatgruppen aufweisende, im wesentlichen Epoxygruppen-freie Derivate von Epoxidharzen.

Epoxy(meth)acrylate, die durch Umsetzung eines Epoxidharzes, wie z.B. Bisphenol-Adiglycidyl-ether, mit (Meth)Acrylsäure in Gegenwart von Katalysatoren hergestellt werden (z.B. DE-A 2 349 979) oder, die durch Umsetzung mit sonstigen Reaktionspartnern weiter modifiziert worden sind, und die beispielsweise in DE-A 2 429 527, 4 217 761, 4 109 048, 3 519 117 beschrieben werden, sind normalerweise hochviskose Substanzen, die in niedermolekularen Monomeren oder in Lösungsmitteln gelöst werden, um sie in einen verarbeitungsfähigen Zustand zu überführen. Aus der DE-A 2 547 103 und US-A 418 725 und ebenfalls analoge Epoxyverbindungen bekannt.

Es war daher die der Erfindung zugrundeliegende Aufgabe, ein Verfahren zur Herstellung von Epoxy(meth)acrylaten zur Verfügung zu stellen, die eine für die Monomeren- und Lösungsmittel-freien Verarbeitung ausreichend niedrige Viskosität aufweisen und dennoch die Herstellung von hochwertigen Überzügen, Dichtmassen oder Formkörpern gestatten.

Diese Aufgabe konnte mit der Bereitstellung des nachstehend näher beschriebenen erfindungsgemäßen Verfahrens bzw. der nach diesem Verfahren erhaltenen Epoxy(meth)acrylate gelöst werden.

Gegenstand der Erfindung ist ein Verfahren zur Herstellung von Epoxy(meth)acrylaten durch Umsetzung von Epoxidgruppen aufweisenden organischen Verbindungen des Molekulargewichtsbereichs $\overline{M}_n$ 130 bis 1000 mit

I) Säuregruppen aufweisenden Verbindungen in einer Menge von 0,7 bis 1,0 Carboxyl-Äquivalenten pro Epoxid-Äquivalent und, gegebenenfalls,

II) basischen Stickstoffverbindungen, ausgewählt aus der Gruppe bestehend Ammoniak, (cyclo)aliphatischen, primären oder sekundären Aminen und Gemischen derartiger Basen in einer Menge von 0 bis 0,3 NH-Äquivalenten pro Epoxid-Äquivalent,

unter praktisch vollständiger Umsetzung der ursprünglich vorliegenden Epoxidgruppen, dadurch gekennzeichnet, dass man als Verbindungen I) Carboxyl- und Estergruppen aufweisende Umsetzungsprodukte von

A) organischen Dicarbonsäuren oder Dicarbonsäureanhydriden des Molekulargewichts 98 bis 164 sowie Sebacinsäure, Tetrahydrophthalsäure, Hexahydrophthalsäure, Norbornendiacarbonsäure, Phthalsäure, Isophthalsäure mit

B) alkoholische Hydroxylgruppen aufweisenden, unter Einhaltung eines COOH/OH-Äquivalentverhältnisses von 0,6 bis 0,95 hergestellten Umsetzungsprodukten von

a) (Meth)Acrylsäure und

b) mindestens zwei Ethylenoxideinheiten -$CH_2$-$CH_2$-O- als Teil einer oder mehrerer Etherstrukturen aufweisenden, 3- oder 4-wertigen Etheralkoholen des Molekulargewichtsbereichs 180 bis 1000, die bis zu 20Mol-% Propylenoxideinheiten -$CH_2$-CH($CH_3$)-O- enthalten, wobei das Molverhältnis von den Carboxylgruppen der Komponente A) zu den Hydroxylgruppen der Komponente B) von 1,8 : 1 bis 2,2 :1 ist,

einsetzt.

Gegenstand der Erfindung ist schließlich auch die Verwendung der erhaltenen Epoxy(meth)acrylate in radikalisch härtbaren Überzugsmitteln, Spachtel- oder Dichtmassen oder zur Herstellung von Formkörpern.

Epoxidgruppen aufweisende Verbindungen im Sinne der Erfindung sind organische Verbindungen des Molekulargewichtsbereichs $\overline{M}_n$ 130 bis 1000, die (im statistischen Mittel) pro Molekül mindestens eine, vorzugsweise 1,5 bis 6 und besonders bevorzugt 1,5 bis 2, Epoxidgruppen enthalten. Ein Epoxidäquivalent bedeutet die Menge einer Epoxidverbindung in Gramm, die in ein Mol Epoxidgruppen enthält.

Beispiele geeigneter Epoxidgruppen aufweisender Verbindungen sind insbesondere solche des Epoxidäquivalentgewichtsbereichs 100 bis 500. Konkrete Beispiele sind Polyglycidylether mehrwertiger Phenole wie beispielsweise Brenzkatechin, Resorcin, Hydrochinon, 4,4'-Dihydroxydiphenylmethan, 2,2-(4,4'-Dihydroxydiphenyl)propan (Bisphenol-A), 4,4'-Dihydroxydiphenylcyclohexan, 4,4'-Dihydroxydiphenylsulfon, Tris-(4-hydroxyphenyl)-methan, Novolaken (d. h. aus Umsetzungsprodukten von einoder mehrwertigen Phenolen mit Aldehyden, insbesondere Formaldehyd, in Gegenwart saurer Katalysatoren). Bevorzugt sind Polyglycidylether von Bisphenol-A.

Weiter seien beispielhaft genannt: Glycidylether von Monoalkoholen wie n-Butanol oder 2-Ethylhexanol oder Glycidylether mehrwertiger Alkohole, beispielsweise aus 1,4-Butandiol, 1,4-Butendiol, 1,6-Hexandiol, Glycerin, Trimethylolpropan, Pentaerythrit und Polyethylenglykolen, Triglycidylisocyanurat, Polyglycidylthioether aus mehrwertigen Thiolen wie Bismercaptomethylbenzol oder Glycidylester von Monocarbonsäuren wie Versaticsäure oder Glycidylester mehrwertiger, aromatischer, aliphatischer und cycloaliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Die Säuregruppen aufweisenden Verbindungen I) werden durch Umsetzung von

A) organischen Dicarbonsäuren oder Dicarbonsäureanhydriden des Molekulargewichts 98 bis 164 sowie Sebacinsäure, Tetrahydrophthalsäure, Hexahydrophthalsäure, Norbomendiacarbonsäure, Phthalsäure, Isophthalsäure mit

B) OH-Gruppen aufweisenden, unter Einhaltung eines COOH/OH-Äquivalentverhältnisses von 0,6 bis 0,95 hergestellten Umsetzungsprodukten von

a) (Meth)Acrylsäure und

b) mindestens zwei Ethylenoxideinheiten $-CH_2-CH_2-O-$ als Teil einer Etherstruktur aufweisenden, 3- oder 4-wertigen Etheralkoholen des Molekulargewichtsbereichs 180 bis 1000, die bis zu 20 Mol-% Propylenoxideinheiten $-CH2-CH(CH3)-O-$ enthalten, wobei das Molverhältnis von den Carboxylgruppen der Komponente A) zu den Hydroxylgrupen der Komponente B) von 1,8 bis 2,2:1 ist,

hergestellt. Bei dieser Umsetzung werden die Reaktionspartner A) und B) in solchen Mengen eingesetzt, die einem Molverhältnis von Carboxylgruppen der Komponente A) zu Hydroxylgruppen der Komponente B) von 1,8:1 bis 2,2:1, vorzugsweise 1,9:1 bis 2,1:1 entsprechen, wobei eine Carbonsäureanhydridgruppe wie zwei Carboxylgruppen in die Berechnung eingeht.

Bei den Dicarbonsäuren bzw. den Dicarbonsäureanhydriden A) handelt es sich um gesättigte oder ungesättigte, aliphatische Dicarbonsäuren mit 4 bis 10 Kohlenstoffatomen wie Fumarsäure, Maleinsäure, Bernsteinsäure, Adipinsäure, Itaconsäure und/oder Anhydride derartiger Säuren, cycloaliphatische Dicarbonsäuren oder Dicarbonsäureanhydride mit 8 bis 10 Kohlenstoffatomen bzw. deren Anhydride und aromatische Dicarbonsäuren mit 8 Kohlenstoffatomen oder deren Anhydride wie Phthalsäureanhydrid oder Terephthalsäure sowie Sebacinsäure, Tetrahydrophthalsäure, Hexahydrophthalsäure, Norbornendicarbonensäure, Phthalsäure, Isophthalsäure

Bei der Komponente B) handelt es sich um OH-Gruppen aufweisende, unter Einhaltung eines COOH/OH-Äquivalentverhältnisses von 0,6 bis 0,95, vorzugsweise 0,65 bis 0,90, hergestellte Umsetzungsprodukte aus

a) (Meth)Acrylsäure (z.B. Acrylsäure, Methacrylsäure oder Gemische dieser Säuren) und

b) 3- und/oder 4-wertigen Ethergruppen aufweisenden Alkoholen des Molekulargewichtsbereichs 180 bis 1000, die mindestens zwei Ethylenoxideinheiten $-CH_2-CH_2-O-$ als Teil einer oder mehrerer Etherstrukturen und 3 oder 4 alkoholische Hydroxylgruppen aufweisen.

Etheralkohole b) werden z.B. durch Ethoxylierung von geeigneten Substraten in an sich bekannter Weise erhalten. Geeignete Substrate (Startermoleküle) sind insbesondere die den Etheralkoholen entsprechenden Ethergruppen-freien 3- oder 4-wertigen Alkohole wie Glycerin, Trimethylolpropan, Trimethylolethan, Pentaerythrit usw. oder beliebige Gemische dieser Alkohole.

Die eingesetzten Etheralkohole weisen im Allgemeinen einen Ethoxylierungsgrad von 2 bis 20, vorzugsweise von 2 bis 15 auf. Der Ethoxylierungsgrad gibt die Anzahl der Mole Ethylenoxid an, die an 1 Mol eines als Startermolekül verwendeten Alkohols im Durchschnitt addiert worden sind.

Die Ethergruppen aufweisenden Alkohole b) können bis zu 20 Mol-% Propylenoxideinheiten $-CH_2-CH(CH_3)-O-$ enthalten (Molverhältnis von Ethylenoxid zu Propylenoxid bis zu 5:1). Vorzugsweise enthält Komponente b) Ethoxylierungsprodukte der beispielhaft genannten Startermoleküle mit weniger als 10 Mol-% Propoxylierungsprodukten.

Die Umsetzung der Komponenten a) und b) erfolgt nach bekannten Methoden, z.B. durch Azeotropveresterung von (Meth)Acrylsäure mit Etheralkoholen, wobei die Bedingungen der Veresterungsreaktion im Allgemeinen so lang aufrecht erhalten werden, bis die Lösungsmittel-freien Veresterungsprodukte eine unter 10 mg KOH/g liegende Säurezahl aufweisen.

Die Umsetzung der Komponenten A) und B) erfolgt ebenfalls nach bekannten Verfahren, z.B. durch Schmelzveresterung der Dicarbonsäuren oder Dicarbonsäureanhydriden A) mit den OH-Gruppen der Komponente B).

Die Reaktion der Epoxide mit den Säuregruppen aufweisenden Verbindungen I) ist bekannt (z.B DE-A 2429527, 2534012). Sie erfolgt in Substanz oder in Lösungsmittel. Geeignete Lösemittel sind beispielsweise inerte Lösungsmittel wie Butylacetat, Toluol, Cyclohexan, Gemische derartiger Lösemittel oder copolymerisierbare Monomere, die nachstehend beispielhaft genannt werden. Vorzugsweise werden keine Lösemittel oder Monomere eingesetzt.

Die Umsetzung der Säuregruppen aufweisenden mit den Epoxidgruppen aufweisenden Verbindungen wird in Gegenwart von etwa 0,01 - 3 Gew.-%, bezogen auf Ausgangsepoxid, an Katalysatoren, wie tert. Aminen, quartäre Ammoniumsalzen, Alkalihydroxiden, Alkalisalzen organischer Carbonsäuren, Mercaptanen, Dialkylsulfiden, Sulfonium-, Phosphoniumverbindungen oder Phosphinen, durchgeführt. Bevorzugt werden quartäre Ammoniumsalze wie Triethylbenzylammoniumchlorid eingesetzt.

Die Umsetzung erfolgt bei ca. 40 - 90°C. In speziellen Fällen kann die Temperatur über- oder unterschritten werden. Pro Epoxidäquivalent werden 0,7 bis 1,0, vorzugsweise 0,8 bis 0,98 Carboxyl-Äquivalente der Säuregruppen aufweisenden Verbindungen I) eingesetzt.

Ein Carboxyl-Äquivalent entspricht der Menge Carbonsäure in Gramm in der ein Mol Carboxylgruppen enthalten sind.

Bei den gegebenenfalls einzusetzenden Stickstoffverbindungen II) handelt es sich um Ammoniak und/oder bevorzugt um (cyclo)aliphatische primäre und/oder sekundäre Mono- oder Polyamine des Molekulargewichtsbereichs 31 bis 300.

Beispiele für primäre Amine sind insbesondere Mono- und Diamine, wie Methylamin, n-Butylamin, n-Hexylamin, 2-Ethylhexylamin, Cyclohexylamin, Ethanolamin, Benzylamin, Ethylendiamin, die isomeren Diaminobutane, die isomeren Diaminohexane oder 1,4-Diamino-cyclohexan.

Beispiele für sekundäre Amine sind Dimethylamin, Diethylamin, Diethanolamin, Diisopropanolamin, N-Methylethanolamin oder N-Cyclohexylisopropylamin.

Pro Epoxidäquivalent der eingesetzten Epoxidgruppen enthaltenden Verbindungen werden 0 bis 0,3, bevorzugt 0,02 bis 0,2 NH-Äquivalente der Stickstoffverbindungen eingesetzt. Ein NH-Äquivalent Stickstoffverbindung ist diejenige Menge, in der ein Grammatom an basischem Stickstoff gebundenem Wasserstoff enthalten ist.

Auch die Reaktion der Epoxidgruppen mit den Stickstoffverbindungen kann in Substanz oder in Lösemitteln der bereits beispielhaft genannten Art erfolgen. Die Reaktion in Substanz ist bevorzugt. Die Reaktionstemperatur liegt im Allgemeinen bei 40 bis 90°C, wobei in Ausnahmefällen diese Temperatur auch über- oder unterschritten werden kann.

Bei der Durchführung des Verfahrens werden bei den Teilreaktionen I) und II) alle ursprünglich vorhandenen Epoxidgruppen im wesentlichen abreagiert. Die Summe der Äquivalente der gemäß Stufe I) und II) einzusetzenden Reaktionspartner pro Äquivalent an ursprünglich vorliegenden Epoxidgruppen liegt bei mindestens 1,0, vorzugsweise bei 1,0 bis 1,1.

Um die polymerisierbaren, erfindungsgemäß hergestellten Reaktionsprodukte vor unerwünschter vorzeitiger Polymerisation zu bewahren, empfiehlt es sich, bereits bei der Herstellung 0,001 - 0,2 Gew.-%, bezogen auf das gesamte Reaktionsgemisch, inklusive Hilfs- und Zusatzmitteln, an Polymerisationsinhibitoren oder Antioxidantien zuzusetzen, z.B. Phenole und Phenolderivate, vorzugsweise sterisch gehinderte Phenole. Weitere geeignete Stabilisatoren sind in "Methoden der organischen Chemie" (Houben-Weyl), 4. Auflage, Band XIV/1, S. 433 - 452, 756, Georg Thieme Verlag, Stuttgart, 1961, beschrieben. Sehr gut geeignet sind z. B. 2,6-Di-tert.-butylp.-kresol und/oder Hydrochinonmonomethylether oder Phenothiazin.

Die erfindungsgemäß hergestellten Reaktionsprodukte können ohne Zusatz copolymerisierbarer Monomerer oder Lösemittel zur Anwendung gelangen. Gegebenenfalls können sie auch mit copolymerisierbaren Monomeren oder mit inerten Lösungsmitteln verdünnt werden

Geeignete copolymerisierbare Monomere sind beispielsweise Di- und Polyacrylate sowie Di- und Polymethacrylate von Glykolen mit 2 bis 6 C-Atomen und Polyolen mit 3 - 4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)-acrylate von Polyetherglykolen des Glykols, Propandiol-1,3, Butandiol-1,4, Triacrylate der Umsetzungsprodukte aus 1 Mol Trimethylolpropan und 2,5 bis 5 Mol Ethylenoxid und/oder Propylenoxid, Tri- und Tetraacrylate der Umsetzungsprodukte aus 1 Mol Pentaerythrit und 3 bis 6 Mol Ethylenoxid und/oder Propylenoxid. Weitere copolymerisierbare Monomere sind z. B. aromatische Vinylverbindungen wie Styrol, Vinylalkylether wie Vinylbutyl-ether oder Triethylenglykoldivinylether und Allylverbindungen wie Triallylisocyanurat.

Auch Lösemittel wie Aceton, Ethylmethylketon oder Cyclohexanon können während der Umsetzung oder im Anschluss als Verdünnungsmittel verwendet werden.

Die erfindungsgemäß hergestellten Produkte bzw. ihre Mischungen mit anderen copolymerisierbaren Monomeren stellen wertvolle, mittels energiereicher Strahlung, z.B. UV-Licht, Elektronen- oder Gamma-strahlen aushärtbare Systeme dar. Die Aushärtung kann auch in Gegenwart von Radikale liefernden Substanzen wie (Hydro)Peroxiden, gegebenenfalls in Gegenwart von Beschleunigern, erfolgen.

Bevorzugt werden die erfindungsgemäß hergestellten Reaktionsprodukte als Überzugsmassen oder zur Herstellung von durch UV-Licht härtbaren Überzugsmassen eingesetzt. Ihr besonderer Vorteil liegt darin, dass sie in Gegenwart von Luftsauerstoff und z.B. Fotoinitiatoren in sehr kurzen Zeiten aushärten.

Als Fotoinitiatoren sind die üblicherweise eingesetzten Verbindungen geeignet, wie sie z.B. in "Methoden der organischen Chemie" (Houben-Weyl), Band E 20, Seite 80 ff., Georg Thieme Verlag, Stuttgart 1987, beschrieben sind. Bevorzugt sind z. B. Benzoinether wie Benzoinisopropylether, Benzilketale wie Benzildimethylketal und Hydroxyalkylphenone wie 1-Phenyl-2-hydroxy-2-methylpropan-1-on, Benzophenon und dessen Derivate.

Die erwähnten Fotoinitiatoren, die je nach Verwendungszweck der erfindungsgemäß hergestellten Produkte in Mengen zwischen 0,1 bis 10 Gew.-%, vorzugsweise 0,1 bis 5 Gew.-%, bezogen auf das Gewicht der erfindungsgemäß hergestellten Reaktionsprodukte und der gegebenenfalls zugesetzten copolymerisierbaren Monomeren, eingesetzt werden, können als einzelne Substanz oder in Kombination miteinander verwendet werden.

Besonders bevorzugt werden die erfindungsgemäß hergestellten Produkte als Bindemittelkomponente für Beschichtungsmittel zur Beschichtung der unterschiedlichsten Substrate, z.B. Papier, Kartonage, Leder, Holz, Kunststoffe, Vlies, Textilien, keramische Materialien, z.B. mit fotografischer Schicht ausgerüstetem Papier und als Bindemittel für Formmassen eingesetzt. Ferner können die erfindungsgemäß hergestellten Produkte als Bindemittel für radikalisch härtbare Spachtel- oder Dichtmassen der an sich bekannten Art eingesetzt werden.

## Beispiele

Alle %-Angaben in den Beispielen sind Gew.-%.

OH-Gruppen aufweisende Komponenten B)

Die in Tabelle 1 genannten Mengen an Rohstoffen werden zusammen mit 1,5 % p.-Toluolsulfon-säure, 0,3 % p.-Methoxyphenol und 0,02 % 2,5-Di-tert.-butylhydrochinon, jeweils bezogen auf die Summe a) und b), 70 %ig in Cyclohexan gelöst und unter Rühren und Durchleiten von Luft auf Rückflusstemperatur aufgeheizt. Die Mischung wird so lange bei starkem Rückfluss gehalten, bis eine Säurezahl kleiner 5 (mg KOH/g Substanz) erreicht ist. Nach Abkühlen auf 50°C wird Vakuum angelegt und das Cyclohexan abdestilliert.

Tabelle 1

| Komponente B) | B1 | B2 | B3 |
|---|---|---|---|
| Ausgangsmaterialien (Mol) | | | |
| Acrylsäure (Komponente a) | 2,0 | 2,6 | 2,6 |
| Komponente b)<br>    12fach ethoxyliertes Trimethylolpropan<br>    4fach ethoxyliertes Trimethylolpropan<br>    3fach propoxyliertes Trimethylolpropan | 1,0 | 1,0 | 1,0 |
| Säurezahl (mg KOH/g Substanz) | 4,5 | 4,5 | 3,5 |
| Viskosität (mPa.s/23°C) | 180 | 140 | 145 |

### Beispiele 1 - 3 und Vergleichsbeispiel 4

Die in Tabelle 2 genannten Mengen an Komponente A) und Komponente B) werden unter Rühren und Durchleiten von Luft auf 60°C geheizt und 4 Stunden bei dieser Temperatur gehalten. Die entstehenden Produkte (Komponenten I) werden nicht isoliert, sondern nach Zugabe von 0,1 % Di-tert.-butyl-p.-kresol und 0,5 % Triethylbenzylammoniumchlorid bei 60°C mit Epoxid umgesetzt. Dazu wird die in Tabelle 2 genannte Menge an Epoxid innerhalb 1 Stunde zugegeben. Anschließend wird bei 80°C so lange gerührt, bis eine Säurezahl < 6 (mg KOH/Substanz) erreicht ist. Darauf wird bei 80°C die in Tabelle 2 genannte Menge an Amin (Komponente II) so zudosiert, dass die Temperatur konstant bleibt. Nach einer Nachrührphase bei 80°C von 3 Stunden wird ein Gehalt an Epoxidsauerstoff < 0,3 % gefunden und die Mischung abgekühlt.

Vergleichsbeispiel 4 enthält eine Komponente B, die mit einem nicht erfindungsgemäßen Etheralkohol (propoxyliertem Trimethylolpropan) hergestellt wurde.

Tabelle 2

| Beispiele | | | | Vergleichsbeispiel |
|---|---|---|---|---|
| | 1 | 2 | 3 | 4 |
| Ausgangsmaterialien (Val) | | | | |
| Komponente I | | | | |
| Komponente A | | | | |
| Maleinsäureanhydrid | 1,0 | | 0,45 | 0,45 |
| Phthalsäureanhydrid | | 0,45 | | |
| Komponente B | | | | |
| B1 | 1,0 | | | |
| B2 | | 1,0 | 1,0 | |
| B3 | | | | 1,0 |
| Bisphenol-A-diglycidylether | | | | |
| (Epoxidäquivalent:190) | 1,1 | 0,55 | 0,55 | 0,55 |
| Komponente II Diethanolamin | 0,15 | 0,15 | 0,15 | 0,15 |
| Viskosität (mPa.s/23°C) | 59200 | 15000 | 12000 | 2000 |

**Verwendungsbeispiele**

Die Produkte der erfindungsgemäßen Beispiele 1 bis 3 sowie des Vergleichsbeispiels 4 werden mit jeweils 5 % 1-Phenyl-2-hydroxy-2-methylpropan-1-on versetzt. Nach Auftragen der Lackfilme auf Karton (15 µm Auftragsstärke) werden diese unter einem Hanoviastrahler (80 W/cm, 10 cm Abstand) durchbewegt. Bei mindestens 30 m/Min. Bandgeschwindigkeit entstehen bei den erfindungsgemäßen Beispielen, nicht jedoch bei Vergleichsbeispiel 4, lösemittel- und kratzfeste Überzüge.
Lösemittelfest bedeutet in diesem Fall, dass der Lackfilm nach mindestens 20 Doppelhüben mit einem in Butylacetat getränkten Tuch, unter 1 kg Belastung, noch einwandfrei aussieht.

**Patentansprüche**

**1.** Verfahren zur Herstellung von Epoxy(meth)acrylaten durch Umsetzung von Epoxidgruppen aufweisenden organischen Verbindungen des Molekulargewichtsbereichs Mn 130 bis 1000 mit

I) Säuregruppen aufweisenden Verbindungen in einer Menge von 0,7 bis 1,0 Carboxyl-Äquivalenten pro Epoxid-Äquivalent und, gegebenenfalls,

II) basischen Stickstoffverbindungen, ausgewählt aus der Gruppe bestehend Ammoniak, (cyclo)aliphatischen, primären oder sekundären Aminen und Gemischen derartiger Basen in einer Menge von 0 bis 0,3 NH-Äquivalenten pro Epoxid-Äquivalent,

unter praktisch vollständiger Umsetzung der ursprünglich vorliegenden Epoxidgruppen, **dadurch gekennzeichnet, dass** man als Verbindungen I) Carboxyl- und Estergruppen aufweisende Umsetzungsprodukte von

A) organischen Dicarbonsäuren oder Dicarbonsäureanhydriden des Molekulargewichts 98 bis 164 sowie Sebacinsäure, Tetrahydrophthalsäure, Hexahydrophthalsäure, Norbomendicarbonsäure Phthalsäure, Isophthalsäure mit

B) alkoholische Hydroxylgruppen aufweisenden, unter Einhaltung eines COOH/OH-Äquivalentverhältnisses von 0,6 bis 0,95 hergestellten Umsetzungsprodukten von

a) (Meth)Acrylsäure und

b) mindestens zwei Ethylenoxideinheiten -CH$_2$-CH$_2$-O- als Teil einer oder mehrerer Etherstrukturen aufweisenden, 3- oder 4-wertigen Etheralkoholen des Molekulargewichtsbereichs 180 bis 1000, die bis zu 20 Mol-% Propylenoxideinheiten -CH$_2$-CH(CH$_3$)-O- enthalten, wobei das Molverhältnis von den Carboxylgruppen der Komponente A) zu den Hydroxylgruppen der Komponente B) von 1,8:1 bis 2,2:1 ist,

einsetzt.

**2.** Verwendung der gemäß Anspruch 1 erhaltenen Epoxy(meth)acrylate als Bindemittel in radikalisch härtbaren Überzugsmitteln, Spachtel- oder Dichtmassen oder zur Herstellung von Formkörpern.

**Claims**

**1.** A process for the production of epoxy (meth)acrylates by reacting organic compounds comprising epoxy groups and of the molecular weight range Mn 130 to 1000 with

I) compounds comprising acid groups in a quantity of 0.7 to 1.0 carboxyl equivalents per epoxy equivalent and, optionally,

II) basic nitrogen compounds selected from the group consisting of ammonia, (cyclo)aliphatic, primary or secondary amines and mixtures of such bases in a quantity of 0 to 0.3 NH equivalents per epoxy equivalent,

with virtually complete conversion of the epoxy groups originally present, **characterised in that** the compounds I) used are reaction products comprising carboxyl and ester groups of

A) organic dicarboxylic acids or dicarboxylic anhydrides of a molecular weight of 98 to 164 and sebacic acid, tetrahydrophthalic acid, hexahydrophthalic acid, norbornenedicarboxylic acid, phthalic acid, isophthalic acid with

B) reaction products comprising alcoholic hydroxyl groups and produced while maintaining a COOH:OH equivalent ratio of 0.6 to 0.9 of

a) (meth)acrylic acid and

b) tri- or tetrahydric ether alcohols of the molecular weight range 180 to 1000 comprising at least two ethylene oxide units -CH$_2$-CH$_2$-O- as part of one or more ether structures, which ether alcohols contain up to 20 mol% of propylene oxide units -CH$_2$-CH(CH$_3$)-O-, wherein the molar ratio of the carboxyl groups of component A) to the hydroxyl groups of component B) is 1.8:1 to 2.2:1.

**2.** Use of the epoxy (meth)acrylates obtained according to claim 1 as binders in free-radically curable coating compositions, fillers or sealants or for the production of mouldings.

**Revendications**

**1.** Procédé de préparation d'époxy(méth)-acrylates par réaction de composés organiques présentant des radicaux époxyde, de poids moléculaire M$_n$ dans la gamme allant de 130 à 1000, avec :

I) des composés présentant des radicaux acide en une quantité allant de 0,7 à 1,0 équivalent carboxyle par équivalent époxyde, et le cas échéant,

II) des composés azotés basiques, choisis parmi le groupe consistant en l'ammoniaque, des amines (cyclo) aliphatiques, primaires ou secondaires, et des mélanges de telles bases en une quantité allant de 0 à 0,3 équivalent NH par équivalent époxyde,

avec réaction quasi complète des radicaux époxyde initialement présents, **caractérisé en ce que** l'on met en oeuvre comme composés I), les produits de réaction présentant des radicaux carboxyle et ester de :

A) des diacides carboxyliques organiques ou des anhydrides de diacides carboxyliques de poids moléculaire allant de 98 à 164, ainsi que l'acide sébacique, l'acide tétrahydrophtalique, l'acide hexahydrophtalique, l'acide norbornènedicarboxylique, l'acide phtalique, l'acide isophtalique, avec

B) les produits de réaction présentant des radicaux hydroxyle alcooliques, préparés en maintenant un rapport d'équivalent COOH/OH allant de 0,6 à 0,95, de

a) l'acide (méth)acrylique, et

b) des étheralcools tri- ou tétravalents, présentant au moins deux unités oxyde d'éthylène -$CH_2$-$CH_2$-O- comme partie d'une ou de plusieurs structures éther, de poids moléculaire dans la gamme allant de 180 à 1000, qui contiennent jusqu'à 20% en moles d'unités oxyde de propylène -$CR_2$-CH($CH_3$)-O-, où le rapport molaire des radicaux carboxyle du composant A) aux radicaux hydroxyle du composant B) se situe dans l'intervalle allant de 1,8:1 à 2,2:1.

2. Utilisation de l'époxy(méth)acrylate obtenu suivant la revendication 1, comme liant dans des agents de revêtement durcissables de manière radicalaire, mastics ou masses d'étanchéification ou pour la préparation d'articles moulés.